**Europäisches Patentamt**

(19) **European Patent Office**

**Office européen des brevets**

(11) Veröffentlichungsnummer: **0 015 891
B1**

(12) # EUROPÄISCHE PATENTSCHRIFT

(45) Veröffentlichungstag der Patentschrift:
**27.07.83**

(51) Int. Cl.³: **G 01 F 5/00**

(21) Anmeldenummer: **80890016.1**

(22) Anmeldetag: **12.02.80**

(54) **Flügelradzähler.**

(30) Priorität: **12.02.79 AT 1012/79**

(43) Veröffentlichungstag der Anmeldung:
**17.09.80 Patentblatt 80/19**

(45) Bekanntmachung des Hinweises auf die Patenterteilung:
**27.07.83 Patentblatt 83/30**

(84) Benannte Vertragsstaaten:
**BE DE FR IT NL SE**

(56) Entgegenhaltungen:
**DE-A-2 750 269
FR-A-496 764
FR-A-1 036 059
GB-A-285 984
NL-A-6 406 000**

(73) Patentinhaber: **ELIN-UNION Aktiengesellschaft für elektrische Industrie, Penzinger Strasse 76, A-1141 Wien (AT)**

(72) Erfinder: **Ritter, Hermann, Griegstrasse 1 - 3/4/5, A-1200 Wien (AT)**
Erfinder: **Mehl, Wilhelm, Säuleng. 21/20, A-1090 Wien (AT)**
Erfinder: **Windhab, Wilhelm, Maurichg. 27/7/1, A-1220 Wien (AT)**

(74) Vertreter: **Krause, Peter, Penzinger Strasse 76, A-1141 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 015 891 B1

## Flügelradzähler

Die Erfindung betrifft einen Flügelradzähler nach dem Nebenstromprinzip mit einem in ein Zählergehäuse einsetzbarem, das Zählwerk, das Flügelrad und den Flügelradbecher aufweisenden Meßeinsatz.

Es ist an sich bekannt, Flüssigkeitszähler nach dem Nebenstromprinzip herzustellen. So wird beispielsweise dieses Prinzip bei Partialwassermessern, die eine Abart des Venturimessers sind, angewandt. Beim Partialwassermesser erfolgt das Summieren der durchflossenen Wassermenge mittels eines mechanischen Wasserzählers. Er wird in die Verbindungsleitung der beiden Druckentnahmestellen eingebaut. Da das Verhältnis zwischen Teilstrom und Gesamtmenge stets konstant ist, wird nur die jeweilige Konstante empirisch ermittelt. Mit dieser muß man die Zähleranzeige multiplizieren, um den gesamten Durchfluß zu erhalten. Es ist auch möglich, die Anzeige des Zählers so zu gestalten, daß gleich die Gesamtmeng abgelesen werden kann. (Handbuch der Wassermessung von J. Böhler und H. Rathke).

Es ist aber auch aus der DE-A-2 647 297 ein Flügelradzähler bekannt, bei dem mit Hilfe eines Universalmeßeinsatzes ein neuer Zähler, etwa der Größe 3/7 m³/h geschaffen wird. In dieser Druckschrift wird auch vorgeschlagen, für bekannte Zählergehäuse mit 5 oder mehr m³/h Nennbelastung, die Abmessungen des Meßeinsatzes den Normmaßen für den kleineren Zähler von 3 m³/h od. dgl. anzupassen und für den Einbau dieses Universalmeßeinsatzes in größere Zählergehäuse einen im Querschnitt winkelförmigen Sitzausgleichsring in die Trennwand des Zählergehäuses einzusetzen. Durch diesen winkelförmigen Sitzausgleichsring kann der in der Norm vorgesehene geringe Unterschied im Gehäusesitzdurchmesser und gleichzeitig auch in Sitzhöhe des Gehäuses ausgeglichen werden. Es ist aber einzusehen, daß mit diesem Vorschlag keine generelle Vereinheitlichung sämtlicher Flüssigkeitszählertypen erfolgen kann.

In der DE-A-2 363 909 ist ein als kompakte Einheit ausgebildeter Meßeinsatz beschrieben, der in verschiedene Wasserzählergehäuse, die unterschiedliche Form und Abmessungen, jedoch die gleiche Auslegung wie der Meßeinsatz aufweisen, eingesetzt werden kann. Ein derartiger Meßeinsatz für 3 m³/h wird nur in ein Gehäuse eines 3 m³/h-Zählers eingesetzt, wobei nur die Fertigungstoleranzen dieses Gehäuses durch einen Zentrierring ausgeglichen werden. Ähnlich diesem Gedanken kommt bereits der Sitzausgleichsring der oben zitierten DE-A-2 647 297.

Das Ausgleichen der Fertigungstoleranzen des Gehäuses gemäß der DE-A-2 363 909 wird noch dadurch unterstrichen, daß das Mantelrohr bzw. auch der Zentrierring direkt am Außendurchmesser des Flügelradbechers angespritzt wird. Die dabei vogesehenen Bypass-Öffnungen dienen nur für die Verschiebung der Fehlerkurve des Zählers. Ein Zähler nach dem Nebenstromprinzip kann damit nicht geschaffen werden.

Aus dem Handbuch der Wassermessung von J. Böhler und H. Rathke Seite 257 ist auch ein Mehrstrahlflügelradzähler der eingangs genannten Art bekannt, bei dem der im Nebenstrom fließende Teil der Flüssigkeit, also der Teil der Flüssigkeit, die nicht durch das Meßwerk fließt, geradlinigdurch das Zählergehäuse geleitet wird. Bei diesem Zähler tritt aber der Nachteil auf, daß das Verhältnis zwischen Teilstrom und Gesamtmenge über den ganzen Meßbereich gesehen, nicht konstant ist.

Aufgabe der Erfindung ist es daher, einen Flüssigkeitszähler der eingangs genannten Art zu schaffen, bei dem unabhängig von der Nennbelastung immer der gleiche Meßeinsatz eingebaut werden kann.

Diese Aufgabe wird durch die Erfindung gelöst. Der erfindungsgemäße Flüssigkeitszähler ist dadurch gekennzeichnet, daß ein den Flügelradbecher umfassendes, einerseits als Einströmsieb des Meßeinsatzes ausgebildetes und andererseits für den Durchtritt der Flüssigkeit vom Einströmteil zum Abflußteil im Gehäuse mit Öffnungen versehenes, als hydraulischer Shunt dienendes Zwischenstück vorgesehen ist. Mit dieser Erfindung ist es erstmals möglich, Flüssigkeitszähler mit verschiedensten Nennbelastungen immer mit dem gleichen Meßeinsatz auszustatten. Dieser Meßeinsatz besteht also eigentlich aus dem Meßwerk, dem Zählerwerk und dem oben beschriebenen hydraulischen Shunt. Dieser weist mehrere segmentförmige Kanäle auf. Ferner ist einlaufseitig nach dem Rohrsieb im Zählerstutzen ein zweites kreisringförmiges Sieb zum Schutz des Meßwerkes angebracht. Auslaufseitig besitzt der hydraulische Shunt eine Leiteinrichtung.

Nach einer weiteren Ausgestaltung der Erfindung sind die Öffnungen konzentrisch um das Einströmsieb angeordnet. Durch diese Ausgestaltung ist gewährleistet, daß das Verhältnis zwischen Teilstrom und Gesamtmenge über dem gesamten Meßbereich konstant ist.

Gemäß einem weiteren Merkmal der Erfindung sind die Öffnungen von Stegen begrenzt, die parallel zur Flügelradachse verlaufen. Mit diesen erfindungsgemäßen Stegen im Zusammenhang mit dem am Zwischenstück vorgesehenen Leitapparat kann der Druckverlust der durch den Zähler fließenden Flüssigkeit so gering wie möglich gehalten werden.

Nach einer besonderen Weiterbildung der Erfindung ist das Verhältnis der Querschnittssummen der für den Durchtritt der Flüssigkeit vom Einströmteil zum Abflußteil vorgesehenen Öffnungen zur Querschnittssumme der Öffnungen im Einströmsieb kleiner als das Verhältnis der Auslegung des Zählergehäuses zur Auslegung des Meßeinsatzes. Da der Druckverlust des durch den Meßeinsatz fließenden Teilstromes größer ist als der Druckverlust des direkt also durch den hydraulischen Shunt fließenden Teilstromes, ist diese Weiterbildung wichtig. Dadurch werde die unterschiedlichen Druckverluste ausgeglichen und man erhält ein über dem gesamten Meßbereich im Toleranzfeld liegendes Meßergebnis.

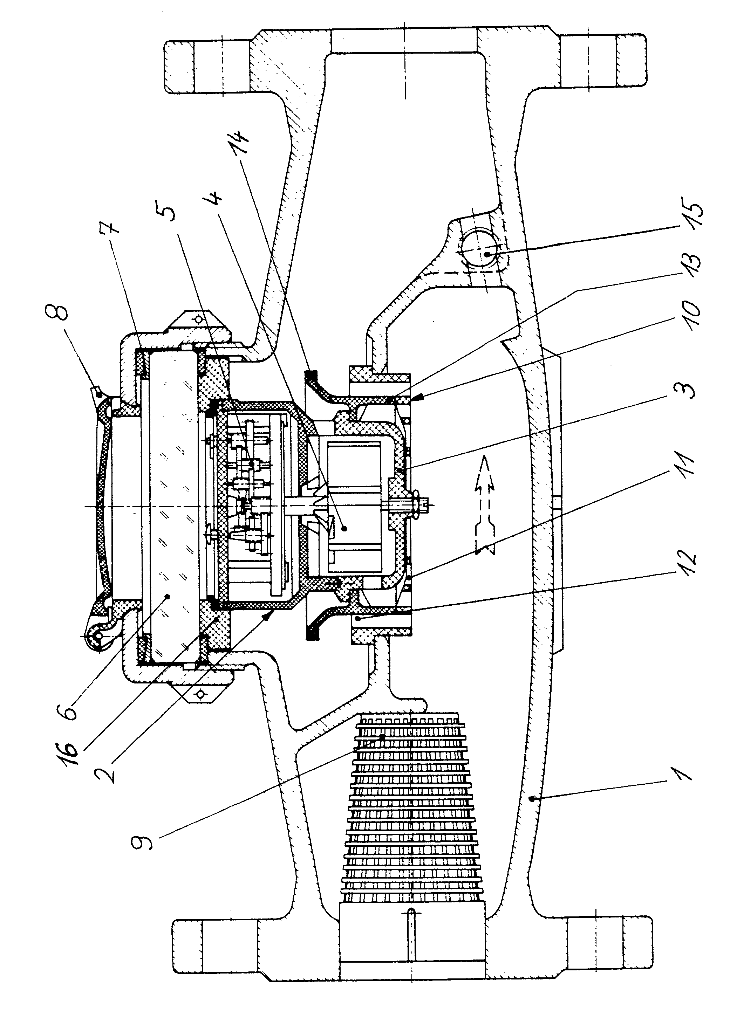

Die Erfindung wird an Hand des in der Zeichnung dargestellten Ausführunsbeispieles näher erläutert.

Der in der Zeichnung dargestellte Flüssigkeitszähler weist ein Zählergehäuse 1 auf, in das der Meßeinsarz 2 eingesetzt ist. Der Meßeinsatz 2 besteht aus dem Flügelradbecher 3 mit dem Flügelrad 4 und dem hierauf aufgesetzten Zählwerk 5. Die Abdichtung des Zählergehäuses erfolgt über eine Glasscheibe 6, die von einem Ring 7 gehalten wird. Dieser Ring 7 kann auch noch einen Zählerdeckel 8 aufweisen. Einströmseitig ist im Zählergehäuse 1 ein Rohrsieb 9 angeordnet.

Um nun den einheitlichen Meßeinsatz, der beispielsweise für 3 m³/h ausgelegt ist, in einen Zähler mit einer Durchflußmenge von 20 m³/h einbauen zu können, wird ein den Flügelradbecher 3 umfassendes Zwischenstück 10 vorgesehen. Dieses Zwischenstück 10 ist einerseits als Einströmsieb 11 ausgebildet und andererseits für den Durchtritt der Flüssigkeit vom Einströmteil zum Abflußteil im Gehäuse mit Öffnungen 12 versehen. Diese Öffnungen 12 sind konzentrisch um das Einströmsieb angeordnet und von Stegen 13 begrenzt, die parallel zur Flügelradachse verlaufen. Die Stege 13 gehen dann abflußseitig in einen Leitapparat 14 über. Um den Meßeinsatz 2 im Gehäuse 1 zentrisch zu halten, kann kopfseitig ein Haltering 16 vorgesehen sein.

Da der durch den Meßeinsatz 2 strömende Flüssigkeitsteilstrom einen größeren Druckverlust erleidet, ist das Verhältnis der Querschnittssumme der Öffnungen 12 zur Querschnittsumme der Öffnungen im Einströmsieb 11 kleiner als das Verhältnis der Auslegung des Zählers zur Auslegung des Meßeinsatzes.

Darüber hinaus ist die Zahnraduntersetzung im Zählwerk 5 so ausgelegt, daß die gesamte durch den Zähler durchgeflossene Wassermenge angezeigt wird. Eine Einjustierung dieses Zählertyps erfolgt über eine von außen zugängige Nebenstromregulierung 15.

## Patentansprüche

1. Flügelradzähler nach dem Nebenstromprinzip mit einem in ein Zählergehäuse einsetzbarem, das Zählwerk, das Flügelrad und den Flügelradbecher aufweisenden Meßeinsatz, dadurch gekennzeichnet, daß ein den Flügelradbecher (3) umfassendes, einerseits als Einströmsieb (11) des Meßeinsatzes (2) ausgebildetes und andererseits für den Durchtritt der Flüssigkeit vom Einströmteil zum Abflußteil im Gehäuse (1) mit Öffnungen (12) versehenes als hydraulischer Shunt dienendes Zwischenstück (10) vorgesehen ist.

2. Flügelradzähler nach Anspruch 1, dadurch gekennzeichnet, daß die Öffnungen (12) konzentrisch um das Einströmsieb (11) angeordnet sind.

3. Flügelradzähler nach Anspruch 1 oder 2, dadurch gekennzeichnet, daß die Öffnungen (12) von Stegen (13) begrenzt sind, die parallel zur Flügelradachse verlaufen.

4. Flügelradzähler nach Anspruch 1 bis 3, dadurch gekennzeichnet, daß das Verhältnis der Querschnittssumme der für den Durchtritt der Flüssigkeit vom Einströmteil zum Abflußteil vorgesehenen Öffnungen (12) zur Querschnittssumme der Öffnungen im Einströmsieb (11) kleiner ist als das Verhältnis der Auslegung des Zählergehäuses zur Auslegung des Meßeinsatzes (2).

## Claims

1. Fan wheel counter in accordance with the induction current principle having a measuring guage which may be inserted in a counter housing and which comprises the counter, the fan wheel and the fan wheel cup, characterised in that an intermediate member (10) surrounding the fan wheel cup (3) formed, on one hand, as an intake filter (11) of the measuring guage (2) and provided, on the other hand, with apertures (12) for the passage of the fluid from the intake portion to the discharge portion in the housing (1) and serving as a hydraulic shunt.

2. Fan wheel counter as claimed in claim 1, characterised in that the apertures (12) are disposed concentrically around the intake filter (11).

3. Fan wheel counter as claimed in claim 1 or 2, characterised in that the apertures (12) are bounded by ribs (13) which extend parallel to the axis of the fan wheel.

4. Fan wheel counter as claimed in claims 1 to 3, characterised in that the ration of the total cross-section of the apertures (12) provided for the passage of the fluid from the intake portion to the discharge portion to the total cross-section of the apertures in the intake filter (11) is smaller than the ration of the design of the counter housing to the design of the measuring gauge (2).

## Revendications

1. Compteur à roue à ailettes selon le principe du courant dérivé, comportant un dispositif intérieur de mesure qui peut s'insérer dans un boîtier de compteur et présente le mécanisme compteur, la roue à ailettes et la cuvette de roue à ailettes, caractérisé par le fait qu'il comporte un élément intermédiaire servant de dérivation hydraulique, entourant la cuvette de roue à ailettes (3), constitué d'une part comme un tamis d'afflux (11) du dispositif intérieur de mesure (2) et muni d'autre part d'ouvertures (12) pour le passage du liquide de la partie d'afflux à la partie d'écoulement du boîtier (1).

2. Compteur à roue à ailettes selon la revendication 1, caractérisé par le fait que les ouvertures (12) sont disposées concentriquement autour du tamis d'afflux (11).

3. Compteur à roue à ailettes selon l'une des revendications 1 et 2, caractérisé par le fait que les ouvertures (12) sont limitées par des filets (13) qui sont dirigés parallèlement à l'axe de la roue à ailettes.

4. Compteur à roue à ailettes selon l'une des revendications 1 à 3, caractérisé par le fait que le rapport entre la somme des sections des ouvertures (12) prévues pour le passage du liquide de la partie d'afflux à la partie d'écoulement et la somme des sections des ouvertures du tamis d'afflux (11) est plus petit que le rapport entre la dimension du boîtier de compteur et la dimension du dispositif intérieur de mesure.